# EUROPEAN PATENT APPLICATION

(11) **EP 4 092 080 A1**
(43) Date of publication of application: **23.11.2022**
(21) Application number: 21174192.1
(22) Date of filing: 17.05.2021
(51) Int. Cl.: C08L 69/00, C08K 5/49

(54) **WEATHERABLE POLYESTER CARBONATES COPOLYMERS FOR INTERIOR AND EXTERIOR TRAIN COMPONENTS**

(71) Applicant: SHPP Global Technologies B.V., 4612 PX Bergen op Zoom (NL)
(72) Inventor: Schwartz, Erik, Bergen op Zoom (NL); van der Mee, Mark Adrianus Johannes, Bergen op Zoom (NL)
(74) Representative: Balder IP Law, S.L.

(57) **Abstract**

A polycarbonate composition comprising: 1-65 wt% of a homopolycarbonate; 35-99 wt% of a poly(carbonate-co-arylate ester) comprising 60-90 mol% of bisphenol A carbonate units, 10-30 mol% of isophthalic acid-terephthalic acid-resorcinol ester units, and 1-20 mol% of resorcinol carbonate units; an organophosphorus flame retardant in an amount effective to provide up to 1.5 wt% phosphorous; optionally, up to 5 wt% of an additive composition, wherein each amount is based on the total weight of the polycarbonate composition, which sums to 100 wt%.

## Description

### BACKGROUND

This disclosure is directed to compositions for components for the interior or exterior of trains, and in particular weatherable compositions.

The harmonized fire standard for rail applications, namely EN-45545, imposes stringent requirements on heat release, smoke density, and toxicity and flame spread properties allowed for materials used in rail applications in the European Union.

As set-forth in the requirements of EN-45545, "Hazard Levels" (HL1 to HL3) have been designated, reflecting the degree of probability of personal injury as the result of a fire. The levels are based on dwell time and are related to operation and design categories. HL1 is the lowest hazard level and is typically applicable to vehicles that run under relatively safe conditions (easy evacuation of the vehicle). HL3 is the highest hazard level and represents most dangerous operation/design categories (difficult and/or time-consuming evacuation of the vehicle, e.g. in underground rail cars).

EN-45545 classifies products are classified into 26 requirements sets (R1-R26). R4 includes lighting products. For each product type, different test requirements for the hazard levels are defined.

The testing methods, and critical heat flux at extinguishment (CFE, spread of flame), flame spread, flaming droplets, and toxicity for the various hazard levels in the European Railway standard EN-45545 (2013) are shown in Table 1 for R4 applications.

**Table 1.**

| European Railways Standard EN 45545 for R4 applications | | | | |
|---|---|---|---|---|
| Hazard Level | Critical heat flux at extinguishment (CFE), 50 kW/m², ISO 5658-2 | Flame Spread ISO11925-2 | Flaming Droplets ISO11925-2 | Conventional index of toxicity (CIT), 50 kW/m², at 4 minutes and 8 minutes, ISO 5659-2 |
| HL1 | 13 | 150 | 0 | 1.2 |
| HL2 | 13 | 150 | 0 | 0.9 |
| HL3 | 13 | 150 | 0 | 0.75 |

Polycarbonates are useful in the manufacture of articles and components for a wide range of applications, from automotive parts to electronic appliances. Because of their broad use, particularly in railway lighting applications, it is desirable to provide polycarbonate compositions with properties that meet or exceed the requirements set-forth under EN-45545.

However, it is particularly challenging to manufacture articles that meet these standards and that have a high transmission ratio, chemical resistance, and weatherability. Accordingly, there remains a need for polycarbonate compositions that have a combination of low spread of flame (CFE), low toxicity, and low flame spread properties. It would be a further advantage if the polycarbonate compositions had a high transmission ratio, chemical resistance, and good weatherability.

### SUMMARY

The above-described and other deficiencies of the art are met by a polycarbonate composition comprising: 1-65 wt% of a homopolycarbonate; 35-99 wt% of a poly(carbonate-co-arylate ester) comprising 60-90 mol% of bisphenol A carbonate units, 10-30 mol% of isophthalic acid-terephthalic acid-resorcinol ester units, and 1-20 mol% of resorcinol carbonate units; an organophosphorus flame retardant in an amount effective to provide up to 1.5 wt% phosphorous; optionally, up to 5 wt% of an additive composition, wherein each amount is based on the total weight of the polycarbonate composition, which sums to 100 wt%.

In another aspect, a method of manufacture comprises combining the above-described components to form a polycarbonate composition.

In yet another aspect, an article comprises the above-described polycarbonate composition.

In still another aspect, a method of manufacture of an article comprises molding, extruding, or shaping the above-described polycarbonate composition into an article.

The above described and other features are exemplified by the following detailed description, examples, and claims.

### DETAILED DESCRIPTION

The inventors hereof have discovered polycarbonate compositions useful for rail lighting applications that have an improved critical heat flux at extinguishment (CFE), low toxicity, low flame spread properties, while also having improved optical properties (e.g., high transmission ratio) and weatherability, such that the molded articles of the compositions such that the yellowness shift is minimized or eliminated when exposed to UV light over time. It is exceptionally challenging to manufacture railway lighting products that meet stringent CFE, the flame spread, and toxicity standards in addition to other material requirements while also providing the desired optical properties and weatherability. Advantageously, the inventors have discovered that compositions including a poly(carbonate-siloxane), a homopolycarbonate, and an organophosphorous flame retardant provide the desired CFE, the flame spread, and toxicity characteristics while also providing good optical properties and weatherability. This was a surprising and unexpected discovery because the development of materials which robustly meet EN45545 requirements for R4 while providing the desired optical and weatherability properties when using flame retardants that are not organophosphorous flame retardants has proven challenging in the past. For example, conventional compositions that incorporate a flame retardant salt such as Rimar salt may provide the desired flame spread property but at the expense of the optical and weatherability properties. However, the inventors discovered that the incorporation of an organophosphorous flame retardant resulted in a robust CFE, flame spread, and toxicity values, thus meeting R4 requirements, and allowing good retention of optical properties and weatherability.

In a particularly advantageous feature, the polycarbonate compositions may have a critical heat flux at extinguishment of greater than 13 kW/m², preferably greater than 20 kW/m² as measured in accordance with ISO 5658-2 on a 3 to 4 mm thick plaque at 50 kW/m²; and a conventional index of toxicity value of less than 0.75 in accordance with ISO 5659-2 on a 3 to 4 mm thick plaque at 50 kW/m², having good retention of optical properties and weatherability.

The polycarbonate compositions include a homopolycarbonate, a poly(carbonate-arylate ester), and an organophosphorous flame retardant. The individual components of the polycarbonate compositions are described in detail below.

"Polycarbonate" as used herein means a polymer having repeating structural carbonate units of formula (1) 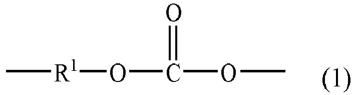 in which at least 60 percent of the total number of R¹ groups contain aromatic moieties and the balance thereof are aliphatic, alicyclic, or aromatic. In an aspect, each R¹ is a C₆₋₃₀ aromatic group, that is, contains at least one aromatic moiety. R¹ may be derived from an aromatic dihydroxy compound of the formula HO-R¹-OH, in particular of formula (2)

HO-A¹-Y¹-A²-OH (2)

wherein each of A¹ and A² is a monocyclic divalent aromatic group and Y¹ is a single bond or a bridging group having one or more atoms that separate A¹ from A². In an aspect, one atom separates A¹ from A². Preferably, each R¹ may be derived from a bisphenol of formula (3) 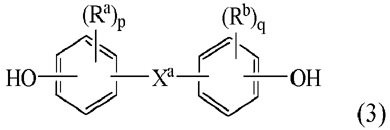 wherein R^{a} and R^{b} are each independently a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. Also in formula (3), X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group. In an aspect, the bridging group X^{a} is single bond, - O-, -S-, -S(O)-, -S(O)₂-, -C(O)-, or a C₁₋₆₀ organic group. The organic bridging group may be cyclic or acyclic, aromatic or non-aromatic, and may further comprise heteroatoms such as halogens, oxygen, nitrogen, sulfur, silicon, or phosphorous. The C₁₋₆₀ organic group may be disposed such that the C₆ arylene groups connected thereto are each connected to a common alkylidene carbon or to different carbons of the C₁₋₆₀ organic bridging group. In an aspect, p and q is each 1, and R^{a} and R^{b} are each a C₁₋₃ alkyl group, preferably methyl, disposed meta to the hydroxy group on each arylene group.

Other useful dihydroxy compounds of the formula HO-R¹-OH include aromatic dihydroxy compounds of formula (6) 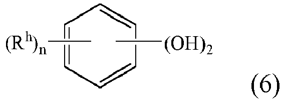 wherein each R^{h} is independently a halogen atom, C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4. The halogen is usually bromine.

Some illustrative examples of specific dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or a combination thereof.

The polycarbonates may have an intrinsic viscosity, as determined in chloroform at 25°C, of 0.3 to 1.5 deciliters per gram (dl/gm), preferably 0.45 to 1.0 dl/gm. The polycarbonates may have a weight average molecular weight (Mw) of 10,000 to 200,000 G/mol, preferably 20,000 to 100,000 g/mol, as measured by gel permeation chromatography (GPC), using a crosslinked styrene-divinylbenzene column, using polystyrene standards and calculated for polycarbonate. GPC samples are prepared at a concentration of 1 mg per ml, and are eluted at a flow rate of 1.5 ml per minute.

The polycarbonate compositions may include a homopolycarbonate (wherein each R¹ in the polymer is the same). In an aspect, the homopolycarbonate in the polycarbonate composition is derived from a bisphenol of formula (2), preferably bisphenol A, in which each of A¹ and A² is p-phenylene and Y¹ is isopropylidene in formula (2).

In some aspects, the polycarbonate is a bisphenol A homopolycarbonate. The bisphenol A homopolycarbonate may have: a melt flow rate of 3-50, per 10 min at 300 °C and a 1.2 kg load and a Mw of 17,000-40,000, g/mole, preferably 20,000-30,000 g/mole, more preferably 21,000 to 23,0000, each as measured as described above. In some aspects, the polycarbonate comprises a linear bisphenol A homopolycarbonate. In some aspects, the polycarbonate comprises a linear bisphenol A polycarbonate homopolymer having a weight average molecular weight of 26,000 to 40,000 grams per mole, preferably 27,000 to 35,000 grams per mole, as determined by gel permeation chromatography using polystyrene standards and calculated for polycarbonate; or a linear bisphenol A polycarbonate homopolymer having a weight average molecular weight of 15,000 to 25,000 grams per mole, preferably 17,000 to 25,000 grams per mole, as determined by gel permeation chromatography using polystyrene standards and calculated for polycarbonate; or a combination thereof.

The homopolycarbonate may be present, for example, from 1-65 wt%, 20-65 wt%, 30-65 wt% or 40-65 wt%, each based on the total weight of the polycarbonate composition.

"Polycarbonates" include homopolycarbonates (wherein each R¹ in the polymer is the same) and copolymers comprising different R¹ moieties in the carbonate ("copolycarbonates"), and copolymers comprising carbonate units and other types of polymer units, such as ester units or siloxane units.

The polycarbonate compositions include an aromatic poly(ester-carbonate). Such polycarbonates further contain, in addition to recurring carbonate units of formula (1), repeating ester units of formula (3) 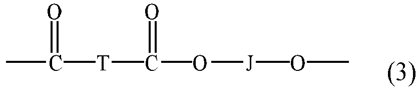 wherein J is a divalent group derived from an aromatic dihydroxy compound (including a reactive derivative thereof), such as a bisphenol of formula (2), e.g., bisphenol A; and T is a divalent group derived from an aromatic dicarboxylic acid (including a reactive derivative thereof), preferably isophthalic or terephthalic acid wherein the weight ratio of isophthalic acid to terephthalic acid is 91:9 to 2:98. Copolyesters containing a combination of different T or J groups may be used. The polyester units may be branched or linear.

In an aspect, J is derived from a bisphenol of formula (2), e.g., bisphenol A. In another aspect, J is derived from an aromatic dihydroxy compound, e.g, resorcinol. A portion of the groups J, for example up to 20 mole percent (mol%) may be a C₂₋₃₀ alkylene group having a straight chain, branched chain, or cyclic (including polycyclic) structure, for example ethylene, n-propylene, i-proplyene, 1,4-butylene, 1,4-cyclohexylene, or 1,4-methylenecyclohexane. Preferably, all J groups are aromatic.

Aromatic dicarboxylic acids that may be used to prepare the polyester units include isophthalic or terephthalic acid, 1,2-di(p-carboxyphenyl)ethane, 4,4'-dicarboxydiphenyl ether, 4,4'-bisbenzoic acid, or a combination thereof. Acids containing fused rings may also be present, such as in 1,4-, 1,5-, or 2,6-naphthalenedicarboxylic acids. Specific dicarboxylic acids include terephthalic acid, isophthalic acid, naphthalene dicarboxylic acid, or a combination thereof. A specific dicarboxylic acid comprises a combination of isophthalic acid and terephthalic acid wherein the weight ratio of isophthalic acid to terephthalic acid is 91:9 to 2:98. A portion of the groups T, for example up to 20 mol%, may be aliphatic, for example derived from 1,4-cyclohexane dicarboxylic acid. Preferably all T groups are aromatic.

The molar ratio of ester units to carbonate units in the polycarbonates may vary broadly, for example 1:99 to 99:1, preferably 10:90 to 90:10, more preferably 25:75 to 75:25, or 2:98 to 15:85, depending on the desired properties of the final composition.

The polycarbonate compositions may include specific poly(ester-carbonate)s are those including bisphenol A carbonate units and isophthalate/terephthalate-bisphenol A ester units, i.e., a poly(bisphenol A carbonate)-co-(bisphenol A-phthalate-ester) of formula (4a) 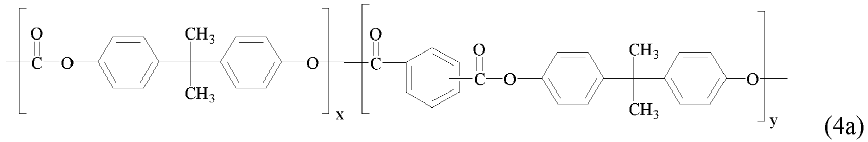 wherein x and y represent the weight percent of bisphenol A carbonate units and isophthalate/terephthalate -bisphenol A ester units, respectively. Generally, the units are present as blocks. In an aspect, the weight ratio of carbonate units x to ester units y in the polycarbonates is 1:99 to 50:50, or 5:95 to 25:75, or 10:90 to 45:55. Copolymers of formula (5) comprising 35-45 wt% of carbonate units and 55-65 wt% of ester units, wherein the ester units have a molar ratio of isophthalate to terephthalate of 45:55 to 55:45 are often referred to as poly(carbonate-ester)s. Copolymers comprising 15-25 wt% of carbonate units and 75-85 wt% of ester units. wherein the ester units have a molar ratio of isophthalate to terephthalate from 98:2 to 88:12 are often referred to as poly(phthalate-carbonate)s and may optionally be present in addition to the certain polycarbonates of the polycarbonate compositions.

In another aspect, the high heat poly(ester-carbonate) is a poly(carbonate-co-monoarylate ester) of formula (4b) that includes aromatic carbonate units (1) and repeating monoarylate ester units 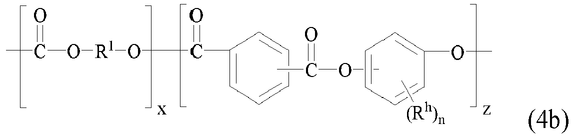 wherein R¹ is as defined in formula (1), and each R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0-4. Preferably, each R^{h} is independently a C₁₋₄ alkyl, and n is 0-3, 0-1, or 0. The mole ratio of carbonate units x to ester units z may be from 99:1 to 1:99, or from 98:2 to 2:98, or from 90:10 to 10:90. In an aspect the mole ratio of x:z is from 50:50 to 99:1, or from 1:99 to 50:50.

In an aspect, the high heat poly(ester-carbonate) comprises aromatic ester units and monoarylate ester units derived from the reaction of a combination of isophthalic and terephthalic diacids (or a reactive derivative thereof) with resorcinol (or a reactive derivative thereof) to provide isophthalate/terephthalate-resorcinol ("ITR" ester units). The ITR ester units may be present in the high heat poly(ester-carbonate) in an amount greater than or equal to 95 mol%, preferably greater than or equal to 99 mol%, and still more preferably greater than or equal to 99.5 mol%, based on the total moles of ester units in the polycarbonate. A preferred high heat poly(ester-carbonate) comprises bisphenol A carbonate units, and ITR ester units derived from terephthalic acid, isophthalic acid, and resorcinol, i.e., a poly(bisphenol A carbonate-co-isophthalate/terephthalate-resorcinol ester) of formula (c) 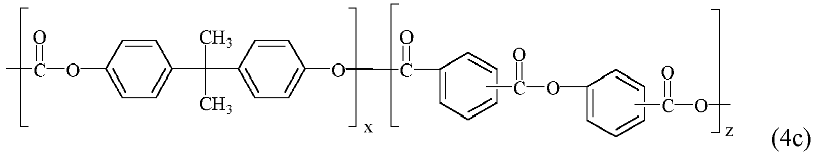 wherein the mole ratio of x:z is from 98:2 to 2:98, or from 90:10 to 10:90. In an aspect the mole ratio of x:z is from 50:50 to 99:1, or from 1:99 to 50:50. The ITR ester units may be present in the poly(bisphenol A carbonate-co-isophthalate-terephthalate-resorcinol ester) in an amount greater than or equal to 95 mol%, preferably greater than or equal to 99 mol%, and still more preferably greater than or equal to 99.5 mol%, based on the total moles of ester units in the copolymer. Other carbonate units, other ester units, or a combination thereof may be present, in a total amount of 1 to 20 mole%, based on the total moles of units in the copolymers, for example monoaryl carbonate units of formula (5) and bisphenol ester units of formula (3a): 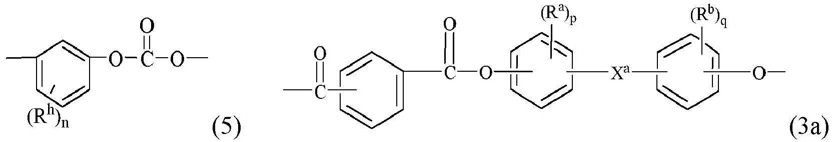 wherein, in the foregoing formulae, R^{h} is each independently a C₁₋₁₀ hydrocarbon group, n is 0-4, R^{a} and R^{b} are each independently a C₁₋₁₂ alkyl, p and q are each independently integers of 0-4, and X^{a} is a single bond, -O-, -S-, -S(O)-, -S(O)₂-, -C(O)-, or a C₁₋₁₃ alkylidene of formula - C(R^{c})(R^{d}) - wherein R^{c} and R^{d} are each independently hydrogen or C₁₋₁₂ alkyl, or a group of the formula -C(=R^{e})- wherein R^{e} is a divalent C₁₋₁₂ hydrocarbon group. The bisphenol ester units may be bisphenol A phthalate ester units of the formula (3b)

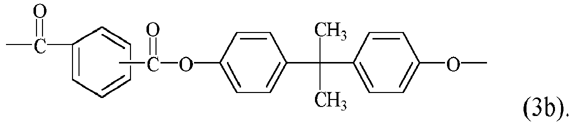

In an aspect, the poly(bisphenol A carbonate-co-isophthalate/terephthalate-resorcinol ester) (4c) comprises 1-90 mol% of bisphenol A carbonate units, 10-99 mol% of isophthalic acid-terephthalic acid-resorcinol ester units, and optionally 1-60 mol% of resorcinol carbonate units, isophthalic acid-terephthalic acid-bisphenol A phthalate ester units, or a combination thereof. In another aspect, poly(bisphenol A carbonate-co-isophthalate/terephthalate resorcinol ester) (6) comprises 10-20 mol% of bisphenol A carbonate units, 20-98 mol% of isophthalic acid-terephthalic acid-resorcinol ester units, and optionally 1-60 mol% of resorcinol carbonate units, isophthalic acid-terephthalic acid-bisphenol A phthalate ester units, or a combination thereof.

The certain polycarbonates of the polycarbonate compositions may include poly(ester-carbonate-siloxane)s comprising bisphenol A carbonate units, isophthalate-terephthalate-bisphenol A ester units, and siloxane units, for example blocks containing 5 to 200 dimethylsiloxane units.

The high heat poly(ester-carbonate)s may have an Mw of 2,000-100,000 g/mol, preferably 3,000-75,000 g/mol, more preferably 4,000-50,000 g/mol, more preferably 5,000-35,000 g/mol, and still more preferably 17,000-30,000 g/mol. Molecular weight determinations are performed using GPC using a cross linked styrene-divinyl benzene column, at a sample concentration of 1 milligram per milliliter, using polystyrene standards and calculated for polycarbonate. Samples are eluted at a flow rate of 1.0 ml/min with methylene chloride as the eluent.

The poly(carbonate-co-arylate ester)s may be present, for example, from 35-99 wt%, 35-80 wt%, 35-70 wt%, or 35-60 wt%, each based on the total weight of the polycarbonate composition.

Polycarbonates may be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) may be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiary-butyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups may be used. Branched polycarbonate blocks may be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1, 1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of 0.05 to 2.0 wt. %. Combinations comprising linear polycarbonates and branched polycarbonates may be used.

An end-capping agent (also referred to as a chain stopper agent or chain terminating agent) may be included during polymerization to provide end groups. The end-capping agent (and thus end groups) are selected based on the desired properties of the polycarbonates. Exemplary end-capping agents are exemplified by monocyclic phenols such as phenol and C₁₋₂₂ alkyl-substituted phenols such as p-cumyl-phenol, resorcinol monobenzoate, and p-and tertiary-butyl phenol, monoethers of diphenols, such as p-methoxyphenol, and alkyl-substituted phenols with branched chain alkyl substituents having 8 to 9 carbon atoms, 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, mono-carboxylic acid chlorides such as benzoyl chloride, C₁₋₂₂ alkyl-substituted benzoyl chloride, toluoyl chloride, bromobenzoyl chloride, cinnamoyl chloride, and 4-nadimidobenzoyl chloride, polycyclic, mono-carboxylic acid chlorides such as trimellitic anhydride chloride, and naphthoyl chloride, functionalized chlorides of aliphatic monocarboxylic acids, such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups may be used.

The polycarbonate compositions include an organophosphorous flame retardant. In the aromatic organophosphorous compounds that have at least one organic aromatic group, the aromatic group may be a substituted or unsubstituted C₃₋₃₀ group containing one or more of a monocyclic or polycyclic aromatic moiety (which may optionally contain with up to three heteroatoms (N, O, P, S, or Si)) and optionally further containing one or more nonaromatic moieties, for example alkyl, alkenyl, alkynyl, or cycloalkyl. The aromatic moiety of the aromatic group may be directly bonded to the phosphorous-containing group, or bonded via another moiety, for example an alkylene group. The aromatic moiety of the aromatic group may be directly bonded to the phosphorous-containing group, or bonded via another moiety, for example an alkylene group. In an aspect the aromatic group is the same as an aromatic group of the polycarbonate backbone, such as a bisphenol group (e.g., bisphenol A), a monoarylene group (e.g., a 1,3-phenylene or a 1,4-phenylene), or a combination comprising at least one of the foregoing.

The phosphorous-containing group may be a phosphate (P(=O)(OR)₃), phosphite (P(OR)₃), phosphonate (RP(=O)(OR)₂), phosphinate (R₂P(=O)(OR)), phosphine oxide (R₃P(=O)), or phosphine (R₃P), wherein each R in the foregoing phosphorous-containing groups may be the same or different, provided that at least one R is an aromatic group. A combination of different phosphorous-containing groups may be used. The aromatic group may be directly or indirectly bonded to the phosphorous, or to an oxygen of the phosphorous-containing group (i.e., an ester).

In an aspect the aromatic organophosphorous compound is a monomeric phosphate. Representative monomeric aromatic phosphates are of the formula (GO)₃P=O, wherein each G is independently an alkyl, cycloalkyl, aryl, alkylarylene, or arylalkylene group having up to 30 carbon atoms, provided that at least one G is an aromatic group. Two of the G groups may be joined together to provide a cyclic group. In some aspects G corresponds to a monomer used to form the polycarbonate, e.g., resorcinol. Exemplary phosphates include phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, and the like. A specific aromatic phosphate is one in which each G is aromatic, for example, triphenyl phosphate, tricresyl phosphate, isopropylated triphenyl phosphate, and the like.

Di- or polyfunctional aromatic organophosphorous compounds are also useful, for example, compounds of the formulas 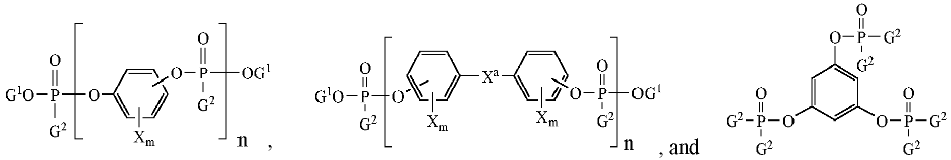 wherein each G¹ is independently a C₁₋₃₀ hydrocarbyl; each G² is independently a C₁₋₃₀ hydrocarbyl or hydrocarbyloxy; X^{a} is as defined in formula (3) or formula (4); each X is independently a bromine or chlorine; m is 0 to 4, and n is 1 to 30. In a specific aspect, X^{a} is a single bond, methylene, isopropylidene, or 3,3,5-trimethylcyclohexylidene.

Specific aromatic organophosphorous compounds are inclusive of acid esters of formula (9) 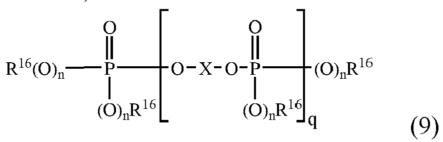 wherein each R¹⁶ is independently C₁₋₈ alkyl, C₅₋₆ cycloalkyl, C₆₋₂₀ aryl, or C₇₋₁₂ arylalkylene, each optionally substituted by C₁₋₁₂ alkyl, specifically by C₁₋₄ alkyl and X is a mono- or poly-nuclear aromatic C₆₋₃₀ moiety or a linear or branched C₂₋₃₀ aliphatic radical, which may be OH-substituted and may contain up to 8 ether bonds, provided that at least one R¹⁶ or X is an aromatic group; each n is independently 0 or 1; and q is from 0.5 to 30. In some aspects each R¹⁶ is independently C₁₋₄ alkyl, naphthyl, phenyl(C₁₋₄)alkylene, aryl groups optionally substituted by C₁₋₄ alkyl; each X is a mono- or poly-nuclear aromatic C₆₋₃₀ moiety, each n is 1; and q is from 0.5 to 30. In some aspects each R¹⁶ is aromatic, e.g., phenyl; each X is a mono- or poly-nuclear aromatic C₆₋₃₀ moiety, including a moiety derived from formula (2); n is one; and q is from 0.8 to 15. In other aspects, each R¹⁶ is phenyl; X is cresyl, xylenyl, propylphenyl, or butylphenyl, one of the following divalent groups 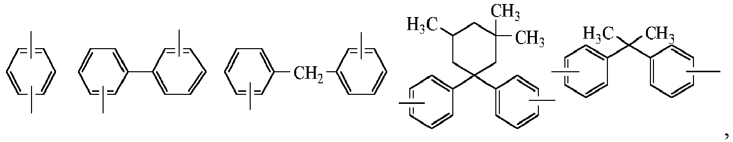 or a combination comprising one or more of the foregoing; n is 1; and q is from 1 to 5, or from 1 to 2. In some aspects at least one R¹⁶ or X corresponds to a monomer used to form the polycarbonate, e.g., bisphenol A, resorcinol, or the like. Aromatic organophosphorous compounds of this type include the bis(diphenyl) phosphate of hydroquinone, resorcinol bis(diphenyl phosphate) (RDP), and bisphenol A bis(diphenyl) phosphate (BPADP), and their oligomeric and polymeric counterparts.

The organophosphorous flame retardant containing a phosphorous-nitrogen bond may be a phosphazene, phosphonitrilic chloride, phosphorous ester amide, phosphoric acid amide, phosphonic acid amide, phosphinic acid amide, or tris(aziridinyl) phosphine oxide. These flame-retardant additives are commercially available. In an aspect, the organophosphorous flame retardant containing a phosphorous-nitrogen bond is a phosphazene or cyclic phosphazene of the formulas 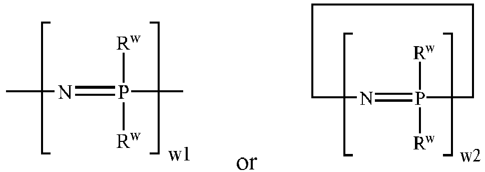 wherein w1 is 3 to 10,000; w2 is 3 to 25, or 3 to 7; and each R^{w} is independently a C₁₋₁₂ alkyl, alkenyl, alkoxy, aryl, aryloxy, or polyoxyalkylene group. In the foregoing groups at least one hydrogen atom of these groups may be substituted with a group having an N, S, O, or F atom, or an amino group. For example, each R^{w} may be a substituted or unsubstituted phenoxy, an amino, or a polyoxyalkylene group. Any given R^{w} may further be a crosslink to another phosphazene group. Exemplary crosslinks include bisphenol groups, for example bisphenol A groups. Examples include phenoxy cyclotriphosphazene, octaphenoxy cyclotetraphosphazene decaphenoxy cyclopentaphosphazene, and the like. In an aspect, the phosphazene has a structure represented by the formula

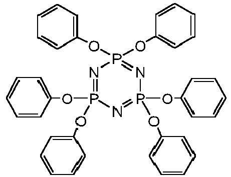

Commercially available phenoxyphosphazenes having the aforementioned structures are LY202 manufactured and distributed by Lanyin Chemical Co., Ltd, FP-110 manufactured and distributed by Fushimi Pharmaceutical Co., Ltd, and SPB-100 manufactured and distributed by Otsuka Chemical Co., Ltd.

The organophosphorous flame retardant may be present up to 1.5 wt%, up to 1.2 wt%, up to 1.0 wt%, up to 0.8 wt%, up to 0.6 wt%, or up to 0.4 wt% of phosphorous, each based on the total weight of the composition.

The polycarbonate compositions may include flame retardants in addition to the organophosphorous flame retardant. Inorganic flame retardants may also be used, for example salts of C₂₋₁₆ alkyl sulfonates such as potassium perfluorobutane sulfonate (Rimar salt), potassium perfluoroctane sulfonate, and tetraethylammonium perfluorohexane sulfonate, salts of aromatic sulfonates such as sodium benzene sulfonate, sodium toluene sulfonate (NATS), and the like, salts of aromatic sulfone sulfonates such as potassium diphenylsulfone sulfonate (KSS), and the like; salts formed by reacting for example an alkali metal or alkaline earth metal (e.g., lithium, sodium, potassium, magnesium, calcium and barium salts) and an inorganic acid complex salt, for example, an oxo-anion (e.g., alkali metal and alkaline-earth metal salts of carbonic acid, such as Na₂CO₃, K₂CO₃, MgCO₃, CaCO₃, and BaCO₃, or a fluoro-anion complex such as Li₃AlF₆, BaSiF₆, KBF₄, K₃AlF₆, KAlF₄, K₂SiF₆, or Na₃AlF₆ or the like. Rimar salt and KSS and NATS, alone or in combination with other flame retardants, are particularly useful. Rimar salt and KSS and NATS, alone or in combination with other flame retardants, are particularly useful. The perfluoroalkyl sulfonate salt may be present in an amount of 0.30 to 1.00 wt%, preferably, 0.40 to 0.80 wt%, more preferably, 0.45 to 0.70 wt%, based on the total weight of the composition. The aromatic sulfonate salt may be present in the final polycarbonate composition in an amount of 0.01 to 0.1 wt%, preferably, 0.02 to 0.06 wt%, and more preferably, 0.03 to 0.05 wt%. Exemplary amounts of aromatic sulfone sulfonate salt may be 0.01 to 0.6 wt%, preferably, 0.1 to 0.4 wt%, and more preferably, 0.25 to 0.35 wt%, based on the total weight of the polycarbonate composition.

Halogenated materials may also be used as flame retardants in addition to the organophosphorous flame retardant, for example bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; and 2,2-bis-(3,5-dichloro-4-hydroxyphenyl)-propane 2,2 bis-(3-bromo-4-hydroxyphenyl)-propane. Other halogenated materials include 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, as well as oligomeric and polymeric halogenated aromatic compounds, such as a copolycarbonate of bisphenol A and tetrabromobisphenol A and a carbonate precursor, e.g., phosgene. Metal synergists, e.g., antimony oxide, may also be used with the flame retardant. When present, halogen containing flame retardants are present in amounts of 1 to 25 parts by weight, more preferably 2 to 20 parts by weight, based on 100 parts by weight of the total composition, excluding any filler.

Anti-drip agents may also be used in the composition, for example a fibril forming or non-fibril forming fluoropolymer such as polytetrafluoroethylene (PTFE). The anti-drip agent may be encapsulated by a rigid copolymer, for example styrene-acrylonitrile copolymer (SAN). PTFE encapsulated in SAN is known as TSAN. An TSAN comprises 50 wt% PTFE and 50 wt% SAN, based on the total weight of the encapsulated fluoropolymer. The SAN may comprise, for example, 75 wt% styrene and 25 wt% acrylonitrile based on the total weight of the copolymer. Anti-drip agents may be used in amounts of 0.1 to 10 parts by weight, based on 100 parts by weight of the total composition, excluding any filler.

In addition to the homopolycarbonate, poly(carbonate-co-arylate ester), and the organophosphorous flame retardant, the polycarbonate composition can include various additives ordinarily incorporated into polymer compositions of this type, with the proviso that the additive(s) are selected so as to not significantly adversely affect the desired properties of the polycarbonate composition, in particular a critical heat flux at extinguishment of greater than 13 kW/m², preferably greater than 20 kW/m², as measured in accordance with ISO 5658-2 on a 3 to 4 mm thick plaque at 50 kW/m²; and a conventional index of toxicity value of less than 0.75 in accordance with ISO 5659-2 on a 3 to 4 mm thick plaque at 50 kW/m². Such additives can be mixed at a suitable time during the mixing of the components for forming the composition. Additives include impact modifiers, fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, flame retardants, and anti-drip agents. A combination of additives can be used, for example a combination of an antioxidant, a mold release agent, and an ultraviolet light stabilizer. In general, the additives are used in the amounts generally known to be effective. For example, the total amount of the additives can be 0.01 to 5 wt.%, based on the total weight of the polycarbonate composition.

In an aspect, the polycarbonate composition can optionally comprise an antimicrobial agent. Any antimicrobial agent generally known can be used either individually or in combination (i.e., of two or more). Exemplary antimicrobial agents can include, but are not limited to a metal containing agent, such as Ag, Cu, Al, Sb, As, Ba, Bi, B, Au, Pb, Hg, Ni, Th, Sn, Zn containing agent. In an aspect, the agent can be silver-containing agent. A suitable silver-containing agent can contain a silver ion, colloidal silver, silver salt, silver complex, silver protein, silver nanoparticle, silver functionalized clay, zeolite containing silver ions or any combinations thereof. Silver salts or silver complexes can include silver acetate, silver benzoate, silver carbonate, silver ionate, silver iodide, silver lactate, silver laureate, silver nitrate, silver oxide, silver palpitate, silver sulfadiazine, silver sulfate, silver chloride, or any combinations thereof.

When present, the antimicrobial agent can be included in an amount of 0.001 to 10 weight percent, based on the total weight of the polycarbonate composition. In an aspect, the composition can contain a silver-containing agent(s) in amounts such that and the silver content in the composition of 0.01 wt. % to 5 wt. %.

The polycarbonate compositions may include 1-65 wt% of a bisphenol A homopolycarbonate; 35-99 wt% of a poly(carbonate-co-arylate ester) comprising 60-90 mol% of bisphenol A carbonate units, 10-30 mol% of isophthalic acid-terephthalic acid-resorcinol ester units, and 1-20 mol% of resorcinol carbonate units; an organophosphorus flame retardant comprising a phosphazene, wherein the organophosphorus flame retardant is present in an amount effective to provide up to 1.5 wt% phosphorous; optionally, up to 5 wt% of an additive composition, wherein each amount is based on the total weight of the polycarbonate composition, which sums to 100 wt%.

The polycarbonate compositions may be manufactured by various methods. For example, powdered polycarbonate, and optional components are first blended, optionally with fillers in a HENSCHEL high speed mixer. Other low shear processes, including but not limited to hand mixing, may also accomplish this blending. The blend is then fed into the throat of a twin-screw extruder via a hopper. Alternatively, at least one of the components may be incorporated into the composition by feeding directly into the extruder at the throat or downstream through a side-stuffer. Additives may also be compounded into a masterbatch with a desired polymeric polymer and fed into the extruder. The extruder is generally operated at a temperature higher than that necessary to cause the composition to flow. The extrudate is immediately quenched in a water bath and pelletized. The pellets so prepared may be one-fourth inch long or less as desired. Such pellets may be used for subsequent molding, shaping, or forming.

Shaped, formed, or molded articles comprising the polycarbonate compositions are also provided. The polycarbonate compositions may be molded into useful shaped articles by a variety of methods, such as injection molding, extrusion, rotational molding, blow molding and thermoforming. In an aspect, the article is an extruded article, a molded article, pultruded article, a thermoformed article, a foamed article, a layer of a multi-layer article, a substrate for a coated article, or a substrate for a metallized article.

Transportation components, in particular interior train components that are molded or extruded from the polycarbonate compositions are also provided. Molding may be by a variety of means such as injection molding, rotational molding, blow molding, and the like. In an aspect, the molding is by injection molding. Illustrative claddings include, for example interior vertical surfaces, such as side walls, front walls, end-walls, partitions, room dividers, flaps, boxes, hoods and louvres; interior doors and linings for internal and external doors; window insulations, kitchen interior surfaces, interior horizontal surfaces, such as ceiling paneling, flaps, boxes, hoods and louvres; luggage storage areas, such as overhead and vertical luggage racks, luggage containers and compartments; driver's desk applications, such as paneling and surfaces of driver's desk; interior surfaces of gangways, such as interior sides of gangway membranes (bellows) and interior linings; window frames (including sealants and gaskets); (folding) tables with downward facing surface; interior and exterior surface of air ducts, and devices for passenger information (such as information display screens) and the like.

Data in the Examples shows that the compositions herein may meet the requirements for HL2, for R4 applications.

While the compositions described herein are designed for use preferably in railway interiors, it is to be understood that the compositions are also useful in other interior components that are required to meet the test standards for HL2 for R4 applications. Interior bus components are preferably mentioned. Current discussions directed to increasing bus safety include proposals to apply the HL2 standards to interior bus components. The claimed compositions accordingly include interior bus components, including lighting components as described above and comprising the preferred compositions described herein, and particularly below, that meet the tests specified in the HL2 standards described above.

In a particularly advantageous feature, the compositions described herein may meet other stringent standards for railway applications. For example, for interior applications used in the United States railway market, materials need to fulfill meet NFPA 130 (2010 edition). This standard imposes requirements on rate of smoke generation and surface flammability. The generation of smoke is measured via the ASTM E662-12 smoke density test and the requirements are a preferred smoke density after 1.5 min (Ds1.5) of 100 and less and a preferred smoke density after 4 min (Ds4) of 200 and less, in either flaming or non-flaming mode. Surface flammability is measured via the ASTM E162-12a flame spread test and the requirements are a maximum flame spread index (Is) of 35 and less, and no flaming, running or dripping allowed. It is calculated from multiplying the flame spread factor (Fs) and the heat evolution factor (Q) determined during the test. Certain of the more preferred compositions described herein, and particularly below, may also meet these standards.

This disclosure is further illustrated by the following examples, which are nonlimiting.

### EXAMPLES

The following components are used in the examples. Unless specifically indicated otherwise, the amount of each component is in wt%, based on the total weight of the composition.

The materials shown in Table 1 were used.

**Table 1.**

| Component | Description | Source |
|---|---|---|
| PC-1 | Linear bisphenol A polycarbonate homopolymer, Mw = 27,000-33,000 g/mol as per GPC using polystyrene standards and calculated for polycarbonate; produced via interfacial process, phenol endcapped | SABIC |
| PC-2 | Linear bisphenol A polycarbonate homopolymer, Mw = 21,000-23,000 g/mol as per GPC using polystyrene standards and calculated for polycarbonate; produced via interfacial process, p-cumyl phenol endcapped | SABIC |
| ITR-PC | Isophthalic acid-terephthalic acid-resorcinol (ITR) - BPA copolyester-carbonate, 19 mol % ITR, p-cumylphenol end-capped, produced via interfacial polymerization, Mw of 29,000-31,000 g/mol as determined by GPC using polycarbonate standards | SABIC |
| EPOXY | a cycloaliphatic, diepoxy functional organic compound, commercially available as ERL 4221E | DOW |
| STAB | Tris(di-t-butylphenyl)phosphite, available as IRGANOX 168 | BASF |
| PEPQ | Tetrakis(2,4-di-tert-butylphenyl) [1,1'-biphenyl] -4,4'-diylbis(phosphonite), available as IRGAPHOS P-EPQ | CLARIANT |
| UVA | 2-(2-Hydroxy-5-tert-octylphenyl) benzotriazole, CAS Reg. No. 3147-75-9, available as Cyasorb UV5411 | CYTEC |
| PETS | PETS (>90% esterified), available as LOXIOL EP 8578 | |
| P-FR | Phenoxycyclophosphazene (13.5 wt% phosphorous); obtained as RABITLE FP-110 | FUSHIMI |
| RIMAR | Potassium perfluorobutane sulfonate | |

The testing samples were prepared as described below and the following test methods were used.

Typical compounding procedures are described as follows: All raw materials were compounded on a 25 mm Werner Pfleiderer ZSK co-rotating twin-screw extruder with a vacuum vented standard mixing screw operated at a screw speed of 300 rpm. The temperature profile is given in Table 1. The strand was cooled through a water bath prior to pelletizing. The pellets were dried for 3-4 hours at 90-110 °C in a forced air-circulating oven prior to injection molding. A typical extrusion profile is listed in Table 2.

**Table 2.**

| Parameters | Unit | 25 mm ZSK |
|---|---|---|
| Die | - | 2 holes |
| Feed temperature | °C | 40 |
| Zone 1 temp. | °C | 180-200 |
| Zone 2-8 temp. | °C | 250-270 |
| Die temperature | °C | 250-270 |
| Screw speed | rpm | 300 |
| Throughput | kg/h | 15-25 |
| Vacuum 1 | bar | ∼0.7 |

An Engel 45, 75, 90 molding machine was used to mold the test parts for standard physical property testing. (for parameters see Table 3).

**Table 3.**

| Parameters | Unit | |
|---|---|---|
| Pre-drying time | h | 3-4 |
| Pre-drying temp. | °C | 90-110 |
| Hopper temp. | °C | 40 |
| Zone 1 temp. | °C | 250-280 |
| Zone 2 temp. | °C | 265-295 |
| Zone 3 temp. | °C | 270-300 |
| Nozzle temp. | °C | 265-295 |
| Mold temperature | °C | 75-90 |
| Screw speed | rpm | 25 |
| Back pressure | bar | 7 |
| Injection time | s | 1.9 |
| Approx. cycle time | s | 45 |

Sample preparation and testing methods are described in Table 4.

**Table 4.**

| Property | Standard | Conditions | Specimen Type |
|---|---|---|---|
| Critical heat flux at extinguishment (CFE) | ISO 5658-2 | 50 kW/m² | 3 or 4 mm thick plaque |
| Conventional index of toxicity (CIT) | ISO 5659-2 | 50 kW/m², at 4 minutes and 8 minutes | 3 or 4 mm thick plaque |
| Flame spread | ISO11925-2 | Maximum 150 mm in 60 seconds | 3 or 4 mm thick plaque |
| Flaming droplets | ISO11925-2 | Number of flaming droplets within 60 seconds | 3 or 4 mm thick plaque |
| Transmission | ISO 1003-0 | | 2.54 mm thick plaque |
| Haze | ISO 1003-0 | | 2.54 mm thick plaque |

### Examples 1-2

Table 5 shows the compositions and properties for Comparative Example 1 and Example 2.

**Table 5.**

| | Units | 1* | 2 |
|---|---|---|---|
| PC-1 | wt% | 9.38 | 9.38 |
| PC-2 | wt% | 44.92 | 43.00 |
| ITR-PC | wt% | 45 | 45 |
| EPOXY | wt% | 0.06 | 0.06 |
| AO-1 | wt% | 0.3 | 0.3 |
| AO-2 | wt% | 0.06 | 0.06 |
| UVA | wt% | 0.2 | 0.2 |
| | | | |
| RIMAR | wt% | 0.08 | |
| P-FR | wt% | | 2 |
| Total | wt% | 100 | 100 |
| %P | wt% | 0 | 0.27 |
| CFE, 3 runs, 3mm | % | 15.2 | 49.1 |
| | % | 37.7 | 50.0 |
| | % | 13.8 | 50.9 |
| CFE, avg. | % | 27.9 | 50 |
| Flame spread, 3 mm | mm | Pass | Pass |
| Flaming droplets, 3 mm | number | 0 | 0 |
| Toxicity, 4 min, 3 mm | | 0.05 | 0.18 |
| Toxicity, 8 min, 3 mm | | 0.1 | 0.27 |
| CFE, 3 runs, 4 mm | % | 18.5 | 50.9 |
| | % | 13.0 | 49.8 |
| | % | 16.3 | 50.9 |
| CFE, avg. | % | 15.9 | 50.5 |
| Flame spread, 4 mm | mm | Pass | Pass |
| Flaming droplets, 4 mm | number | 0 | 0 |
| Toxicity, 4 min, 4 mm | | 0.11 | 0.22 |
| Toxicity, 8 min, 4 mm | | 0.23 | 0.44 |
| Transmiss ion, 2.54 mm | % | 92.5 | 92.1 |
| Haze | | 0.5 | 0.4 |

The composition of Example 2 includes homopolycarbonate (PC-1 and PC-2) and poly(carbonate-co-monoarylate ester) (ITR-PC), and a phosphazene flame retardant provide a desirable combination of properties: good optical properties (% transmission of greater than 90% and a haze of less than 1%), a critical heat flux at extinguishment (CFE) of greater than 13 kW/m², more preferably of greater than 20 kW/m², with no individual measurements lower than 13 kW/m², a pass rating on the flame spread test (ISO 11925-2), no flaming droplets and a flame effluent toxicity of less than 0.75 at 4 minutes and 8 minutes. Comparative Example 1 which includes a similar composition wherein Rimar salt is present instead of the phosphazene flame retardant provides a less robust CFE (ISO 5658-2) result with an individual measurement failing to meet the threshold of greater than 13 at a thickness of 4 mm. Specifically, the CFE was performed three times on each of the samples of Comparative Example 1 and Example 2. However, for Comparative Example 1, one of the tests resulted in a score of 13. The desired score for the spread of flame test is greater than 13. A "pass" rating in the flame spread test (ISO 11925-2) means that either the sample did not ignite when exposed to the flame or if it did ignite, the flame did not spread by 150 mm within 60 seconds.

This disclosure further encompasses the following aspects.
Aspect 1. A polycarbonate composition comprising: 1-65 wt% of a homopolycarbonate; 35-99 wt% of a poly(carbonate-co-arylate ester) comprising 60-90 mol% of bisphenol A carbonate units, 10-30 mol% of isophthalic acid-terephthalic acid-resorcinol ester units, and 1-20 mol% of resorcinol carbonate units; an organophosphorus flame retardant in an amount effective to provide up to 1.5 wt% phosphorous; optionally, up to 5 wt% of an additive composition, wherein each amount is based on the total weight of the polycarbonate composition, which sums to 100 wt%.
Aspect 2. The polycarbonate composition of Aspect 1, wherein a molded sample of the composition has: a critical heat flux at extinguishment of greater than 13 kW/m², preferably greater than 20 kW/m² as measured in accordance with ISO 5658-2 on a 3 to 4 mm thick plaque at 50 kW/m²; and a conventional index of toxicity value of less than 0.75 in accordance with ISO 5659-2 on a 3 to 4 mm thick plaque at 50 kW/m².
Aspect 3. The polycarbonate composition of any one of the preceding aspect s, wherein the homopolycarbonate is a bisphenol A homopolycarbonate.
Aspect 4. The polycarbonate composition of any one of the preceding aspect s, wherein the poly(carbonate-co-arylate ester) comprises units of formula 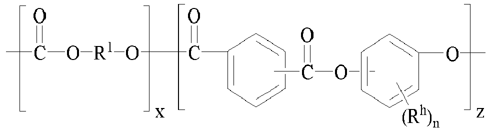 wherein: R¹ is a C₆₋₃₀ aromatic group having at least one aromatic moiety, R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0 to 4, preferably, R^{h} is a C₁₋₄ alkyl, and n is 0 to 3, 0 to 1, or 0, and a mole ratio of carbonate units x to ester units z is from 99:1 to 1:99, or from 98:2 to 2:98, or from 90:10 to 10:90.
Aspect 5. The polycarbonate composition of any one of the preceding aspect s, wherein the poly(carbonate-co-arylate ester) comprises units of formula a poly(bisphenol A carbonate-co-isophthalate-terephthalate-resorcinol ester) of formula 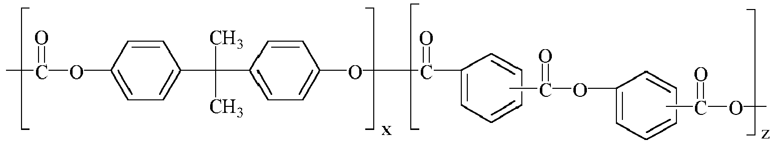 wherein the mole ratio of x:z is or from 98:2 to 2:98, or from 90:10 to 10:90.
Aspect 6. The polycarbonate composition of any of the preceding aspect s, wherein the monoaryl carbonate units have the structure 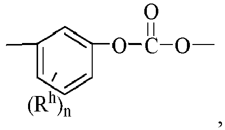 and the aromatic ester units have the structure 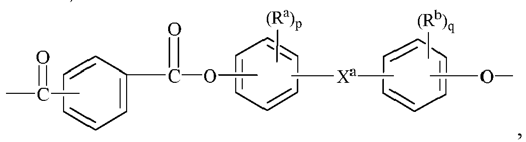 wherein R^{h} is each independently a C₁₋₁₀ hydrocarbon group, n is 0-4, R^{a} and R^{b} are each independently a C₁₋₁₂ alkyl, p and q are each independently integers of 0-4, and X^{a} is a single bond, -O-, -S-, -S(O)-, -S(O)₂-, -C(O)-, or a C₁₋₁₃ alkylidene of formula -C(R^{c})(R^{d}) - wherein R^{c} and R^{d} are each independently hydrogen or C₁₋₁₂ alkyl, or a group of the formula -C(=R^{e})-wherein R^{e} is a divalent C₁₋₁₂ hydrocarbon group.
Aspect 7. The polycarbonate composition of any one of the preceding aspect s, wherein the additive composition is present and comprises an impact modifier, a filler, a reinforcing agent, an antioxidant, a heat stabilizer, a light stabilizer, an ultraviolet light stabilizer, a plasticizer, a lubricant, a mold release agent, an antistatic agent, a colorant, an organic dye, a surface effect additive, a radiation stabilizer, a flame retardant, an anti-drip agent, an antimicrobial agent, or a combination thereof.
Aspect 8. The polycarbonate composition of any one of the preceding aspect s, wherein the homopolycarbonate comprises a first linear bisphenol A homopolycarbonate having a weight average molecular weight of 26,000-40,000 grams per mole, a second linear bisphenol A homopolycarbonate having a weight average molecular weight of 15,000-25,000 grams per mole, or a combination thereof, each as measured via gel permeation chromatography using polystyrene standards and calculated for polycarbonate.
Aspect 9. The polycarbonate composition of any one of the preceding aspect s, wherein the organophosphosphorous flame retardant comprises a monomeric or oligomeric phosphate (P(=O)(OR)₃), phosphite (P(OR)₃), phosphonate (RP(=O)(OR)₂), phosphinate (R₂P(=O)(OR)), phosphine oxide (R₃P(=O)), or phosphine (R₃P), wherein each R in the may be the same or different, provided that at least one R is an aromatic group; a monomeric or oligomeric compound having at least one phosphorous-nitrogen bond; or a combination thereof.
Aspect 10. The polycarbonate composition of any one of the preceding aspect s, wherein the organophosphosphorous flame retardant comprises 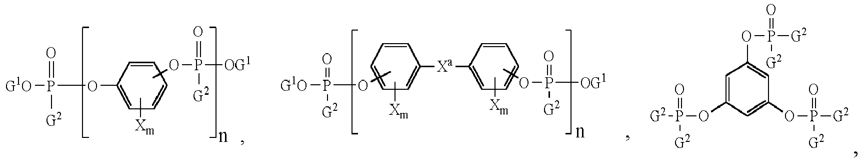 or a combination thereof, wherein each occurrence of G¹ is independently a C₁₋₃₀ hydrocarbyl; each occurrence of G² is independently a C₁₋₃₀ hydrocarbyl or hydrocarbyloxy; each X is independently a bromine or chlorine; m is 0 to 4, and n is 1 to 30; 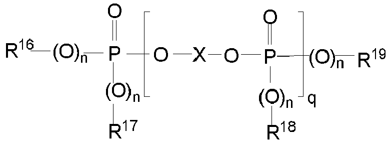 wherein R¹⁶, R¹⁷, R¹⁸, and R¹⁹ are each independently C₁₋₈ alkyl, C₅₋₆ cycloalkyl, C6-20 aryl, or C₇₋₁₂ arylalkylene, each optionally substituted by C₁₋₁₂ alkyl, preferably by C₁₋₄ alkyl and X is a mono- or poly-nuclear aromatic C₆₋₃₀ moiety or a linear or branched C₂₋₃₀ aliphatic radical, each optionally OH-substituted and optionally comprising up to 8 ether bonds, provided that at least one of R¹⁶, R¹⁷, R¹⁸, R¹⁹, and X is an aromatic group; or a combination thereof.
Aspect 11. The polycarbonate composition of any one of the preceding aspect s, wherein the organophosphosphorous flame retardant comprises: a phosphazene, phosphonitrilic chloride, phosphorous ester amide, phosphoric acid amide, phosphonic acid amide, phosphinic acid amide, or tris(aziridinyl) phosphine oxide; or a phosphazene or cyclic phosphazene of the formulas 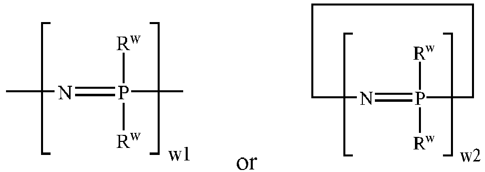 wherein w1 is 3 to 10,000; w2 is 3 to 25, or 3 to 7; and each R^{w} is independently a C₁₋₁₂ alkyl, alkenyl, alkoxy, aryl, aryloxy, or polyoxyalkylene group, optionally wherein at least one hydrogen atom is replaced with an N, S, O, or F atom, or an amino group.
Aspect 12. The polycarbonate composition of any one of the preceding aspect s comprising: 1-65 wt% of a bisphenol A homopolycarbonate; 35-99 wt% of a poly(carbonate-co-arylate ester) comprising 60-90 mol% of bisphenol A carbonate units, 10-30 mol% of isophthalic acid-terephthalic acid-resorcinol ester units, and 1-20 mol% of resorcinol carbonate units; an organophosphorus flame retardant comprising a phosphazene, wherein the organophosphorus flame retardant is present in an amount effective to provide up to 1.5 wt% phosphorous; optionally, up to 5 wt% of an additive composition, wherein each amount is based on the total weight of the polycarbonate composition, which sums to 100 wt%.
Aspect 13. An article comprising the polycarbonate composition of any one of the preceding aspect s, preferably wherein the article is an interior or exterior railway component.
Aspect 14. The article of aspect 13, wherein the railway component comprises interior vertical surfaces, such as a side wall, a front wall, an end-wall, a partitions, a room dividers, a flap, a box, a hood, a louvre; an interior door, a lining for internal and external doors; a window insulation, a kitchen interior surface, an interior horizontal surface, a luggage storage area, a luggage container, a luggage compartment, a driver's desk application, an interior surface of a gangway, a window frame, a table with a downward facing surface; an interior or an exterior surface of an air duct, a device for passenger information, an exterior cladding, an exterior side skirt, exterior paneling, a roof panel, a roof cladding, a portal cladding, an apron flap, or a lighting component, preferably a lighting component.
Aspect 15. A method for forming the article according to aspect 14, comprising molding, casting, or extruding the composition to provide the article.

The compositions, methods, and articles may alternatively comprise, consist of, or consist essentially of, any appropriate materials, steps, or components herein disclosed. The compositions, methods, and articles may additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some aspects", "an aspect", and so forth, means that a particular element described in connection with the aspect is included in at least one aspect described herein, and may or may not be present in other aspects. In addition, it is to be understood that the described elements may be combined in any suitable manner in the various aspects. A "combination thereof' is open and includes any combination comprising at least one of the listed components or properties optionally together with a like or equivalent component or property not listed

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups may be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that may each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C6H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A polycarbonate composition comprising
1-65 wt% of a homopolycarbonate;
35-99 wt% of a poly(carbonate-co-arylate ester) comprising 60-90 mol% of bisphenol A carbonate units, 10-30 mol% of isophthalic acid-terephthalic acid-resorcinol ester units, and 1-20 mol% of resorcinol carbonate units;
an organophosphorus flame retardant in an amount effective to provide up to 1.5 wt% phosphorous;
optionally, up to 5 wt% of an additive composition,
wherein each amount is based on the total weight of the polycarbonate composition, which sums to 100 wt%.

2. The polycarbonate composition of Claim 1, wherein a molded sample of the composition has
a critical heat flux at extinguishment of greater than 13 kW/m², preferably of greater than 20 kW/m² as measured in accordance with ISO 5658-2 on a 3 to 4 mm thick plaque at 50 kW/m²; and
a conventional index of toxicity value of less than 0.75 in accordance with ISO 5659-2 on a 3 to 4 mm thick plaque at 50 kW/m².

3. The polycarbonate composition of any one of the preceding claims, wherein the homopolycarbonate is a bisphenol A homopolycarbonate.

4. The polycarbonate composition of any one of the preceding claims, wherein the poly(carbonate-co-arylate ester) comprises units of formula 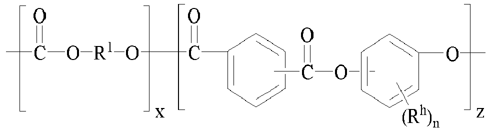 wherein:
R¹ is a C₆₋₃₀ aromatic group having at least one aromatic moiety,
R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0 to 4, preferably, R^{h} is a C₁₋₄ alkyl, and n is 0 to 3, 0 to 1, or 0, and
a mole ratio of carbonate units x to ester units z is from 99:1 to 1:99, or from 98:2 to 2:98, or from 90:10 to 10:90.

5. The polycarbonate composition of any one of the preceding claims, wherein the poly(carbonate-co-arylate ester) comprises units of formula
a poly(bisphenol A carbonate-co-isophthalate-terephthalate-resorcinol ester) of formula 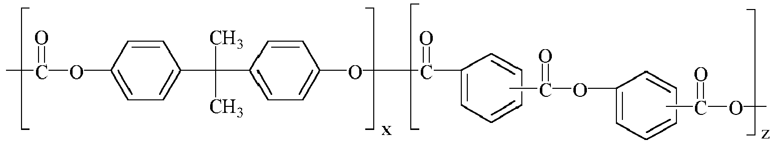 wherein the mole ratio of x:z is or from 98:2 to 2:98, or from 90:10 to 10:90.

6. The polycarbonate composition of any of the preceding claims, wherein the monoaryl carbonate units have the structure 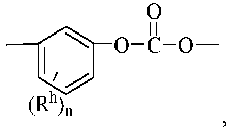 and
the aromatic ester units have the structure 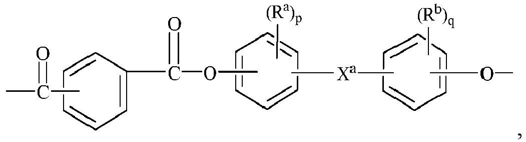 wherein R^{h} is each independently a C₁₋₁₀ hydrocarbon group, n is 0-4, R^{a} and R^{b} are each independently a C₁₋₁₂ alkyl, p and q are each independently integers of 0-4, and X^{a} is a single bond, -O-, -S-, -S(O)-, -S(O)₂-, -C(O)-, or a C₁₋₁₃ alkylidene of formula -C(R^{c})(R^{d}) - wherein R^{c} and R^{d} are each independently hydrogen or C₁₋₁₂ alkyl, or a group of the formula -C(=R^{e})- wherein R^{e} is a divalent C₁₋₁₂ hydrocarbon group.

7. The polycarbonate composition of any one of the preceding claims, wherein the additive composition is present and comprises an impact modifier, a filler, a reinforcing agent, an antioxidant, a heat stabilizer, a light stabilizer, an ultraviolet light stabilizer, a plasticizer, a lubricant, a mold release agent, an antistatic agent, a colorant, an organic dye, a surface effect additive, a radiation stabilizer, a flame retardant, an anti-drip agent, an antimicrobial agent, or a combination thereof.

8. The polycarbonate composition of any one of the preceding claims, wherein the homopolycarbonate comprises
a first linear bisphenol A homopolycarbonate having a weight average molecular weight of 26,000-40,000 grams per mole,
a second linear bisphenol A homopolycarbonate having a weight average molecular weight of 15,000-25,000 grams per mole,
or a combination thereof,
each as measured via gel permeation chromatography using polystyrene standards and calculated for polycarbonate.

9. The polycarbonate composition of any one of the preceding claims, wherein the organophosphosphorous flame retardant comprises
a monomeric or oligomeric phosphate (P(=O)(OR)₃), phosphite (P(OR)₃), phosphonate (RP(=O)(OR)₂), phosphinate (R₂P(=O)(OR)), phosphine oxide (R₃P(=O)), or phosphine (R₃P), wherein each R in the may be the same or different, provided that at least one R is an aromatic group;
a monomeric or oligomeric compound having at least one phosphorous-nitrogen bond;
or a combination thereof.

10. The polycarbonate composition of any one of the preceding claims, wherein the organophosphosphorous flame retardant comprises 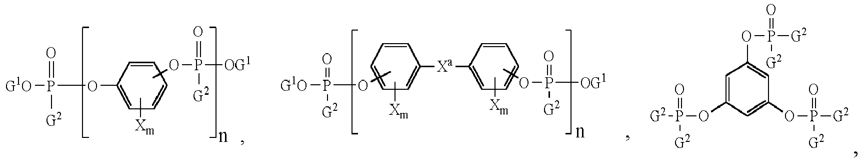 or a combination thereof,
wherein each occurrence of G¹ is independently a C₁₋₃₀ hydrocarbyl; each occurrence of G² is independently a C₁₋₃₀ hydrocarbyl or hydrocarbyloxy; each X is independently a bromine or chlorine; m is 0 to 4, and n is 1 to 30; 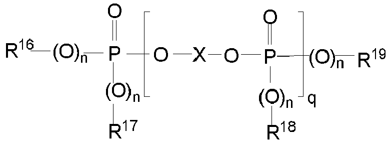
wherein R¹⁶, R¹⁷, R¹⁸, and R¹⁹ are each independently C₁₋₈ alkyl, C₅₋₆ cycloalkyl, C₆₋₂₀ aryl, or C₇₋₁₂ arylalkylene, each optionally substituted by C₁₋₁₂ alkyl, preferably by C₁₋₄ alkyl and X is a mono- or poly-nuclear aromatic C₆₋₃₀ moiety or a linear or branched C₂₋₃₀ aliphatic radical, each optionally OH-substituted and optionally comprising up to 8 ether bonds, provided that at least one of R¹⁶, R¹⁷, R¹⁸, R¹⁹, and X is an aromatic group;
or a combination thereof.

11. The polycarbonate composition of any one of the preceding claims, wherein the organophosphosphorous flame retardant comprises
a phosphazene, phosphonitrilic chloride, phosphorous ester amide, phosphoric acid amide, phosphonic acid amide, phosphinic acid amide, or tris(aziridinyl) phosphine oxide; or
a phosphazene or cyclic phosphazene of the formulas 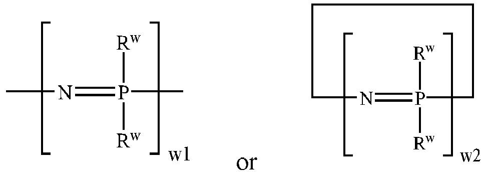
wherein w1 is 3 to 10,000; w2 is 3 to 25, or 3 to 7; and each R^{w} is independently a C₁₋₁₂ alkyl, alkenyl, alkoxy, aryl, aryloxy, or polyoxyalkylene group, optionally wherein at least one hydrogen atom is replaced with an N, S, O, or F atom, or an amino group.

12. The polycarbonate composition of any one of the preceding claims comprising
1-65 wt% of a bisphenol A homopolycarbonate;
35-99 wt% of a poly(carbonate-co-arylate ester) comprising 60-90 mol% of bisphenol A carbonate units, 10-30 mol% of isophthalic acid-terephthalic acid-resorcinol ester units, and 1-20 mol% of resorcinol carbonate units;
an organophosphorus flame retardant comprising a phosphazene, wherein the organophosphorus flame retardant is present in an amount effective to provide up to 1.5 wt% phosphorous;
optionally, up to 5 wt% of an additive composition,
wherein each amount is based on the total weight of the polycarbonate composition, which sums to 100 wt%.

13. An article comprising the polycarbonate composition of any one of the preceding claims, preferably wherein the article is an interior or exterior railway component.

14. The article of claim 13, wherein the railway component comprises interior vertical surfaces, such as a side wall, a front wall, an end-wall, a partitions, a room dividers, a flap, a box, a hood, a louvre; an interior door, a lining for internal and external doors; a window insulation, a kitchen interior surface, an interior horizontal surface, a luggage storage area, a luggage container, a luggage compartment, a driver's desk application, an interior surface of a gangway, a window frame, a table with a downward facing surface; an interior or an exterior surface of an air duct, a device for passenger information, an exterior cladding, an exterior side skirt, exterior paneling, a roof panel, a roof cladding, a portal cladding, an apron flap, or a lighting component, preferably a lighting component.

15. A method for forming the article according to claim 14, comprising molding, casting, or extruding the composition to provide the article.
